# EUROPEAN PATENT SPECIFICATION

(11) **EP 3 590 357 B1**
(45) Date of publication and mention of the grant of the patent: **25.01.2023**
(21) Application number: 18760254.5
(22) Date of filing: 28.02.2018
(51) Int. Cl.: A23L 29/219, A23L 5/10, A23L 19/18, A23P 20/10

(54) **FAT- OR OIL-PROCESSED STARCH**
FETT- ODER ÖLVERARBEITETE STÄRKE
AMIDON TRAITÉ AU MOYEN D'UNE GRAISSE OU D'UNE HUILE

(30) Priority: 28.02.2017 JP 2017037268
(43) Date of publication of application: 08.01.2020
(73) Proprietor: Nihon Shokuhin Kako Co., Ltd., Tokyo 100-0005 (JP)
(72) Inventor: MORIMOTO, Kazuki, Fuji-shi Shizuoka 417-8530 (JP); ARIMOTO, Misa, Fuji-shi Shizuoka 417-8530 (JP); TAKAGUCHI, Hitoshi, Fuji-shi Shizuoka 417-8530 (JP); YAMAMOTO, Toshihiro, Fuji-shi Shizuoka 417-8530 (JP)
(74) Representative: ABG Intellectual Property Law, S.L.
(86) International application number: PCT/JP2018/007434
(87) International publication number: WO 2018/159658

(56) References cited:
- JP-A- H08 173 073
- JP-A- 2003 306 692
- JP-A- 2005 185 122
- JP-A- 2008 163 202
- JP-A- 2010 041 965
- JP-A- 2013 159 730
- US-A1- 2006 292 269

## Description

### TECHNICAL FIELD

The present invention relates to a fat-processed starch which is suitable, for example, as a raw material for a coating material for fries, and a method for producing the same.

### BACKGROUND ART

Fat-processed starches obtained by adding a fat to a starch to mix them and aging the mixture have been widely used as raw materials for batter or dusting flour for fries, because the fat is attached and bound to the starch grains and the fat-processed starches provide preferable texture and adhesion when used as coating materials for fries. For further improvement of adhesion, texture, workability and the like, coating substances for starches, such as fats, to be used in fat-processed starches have also been improved. For example, indicated are those characterized by fat and those using a substance other than fat. For example, the following products have been reported.

Patent Document 1 describes that a fat-processed starch having viscoelasticity and excellent anti- retrogradation properties is obtained by adding a fat having an iodine value of 130 or more to a starch.

Patent Document 2 describes that a coating material for fries with a soft, non-sticky and excellent texture, which is not separated or swollen when adhered, can be obtained by adding an edible fat having a total content of trivalent or higher valent unsaturated fatty acids (triene unsaturated acids, tetraene unsaturated acids, pentaene unsaturated acids, and hexaene unsaturated acids) of 15 mass% or more to a starch and/or grain flour, mixing them uniformly, and then subjecting the mixture to heat-aging treatment.

Patent Document 3 describes that a fat-processed starch having a thickening stabilizing effect and an emulsifying ability in combination can be obtained by adding a fat having a total content of saturated fatty acids and monovalent unsaturated fatty acids of 60 mass% or more to a starch and subjecting the mixture to heat-aging treatment to such an extent that the oil phase disappears in an emulsifying power measuring test.

Patent Document 4 describes that a fry having good adhesion between an ingredient and a coating can be obtained by blending a fat and organic and fatty acid esters of glycerol in a starch. Patent Document 5 describes that soybean flour is uniformly added to a starch, and thereafter that the mixture is dried by heating or stored in a storage room at ordinary temperature or higher according to need, thereby making it possible to stably attain the viscosity required when the product is used as batter and also to provide good adhesion between an ingredient and a coating when frying.

Patent Document 6 describes that an edible protein-containing material and an edible fat are added to a starch to mix them, followed by water addition and drying, thereby making it possible to improve the adhesion and also to provide a soft and crispy texture.

Patent Document 7 describes that, when raw soybean flour is mixed with a starch so that the proportion of the raw soybean flour to the starch ranges from 0.5 to 2.0%, a product obtained by preliminarily dispersing the raw soybean flour in water in an equivalent amount necessary for achieving a water content of the mixture ranging from 18 to 24% and further adding to this solution an appropriate amount of a weakly alkaline salt, according to need, so as to adjust the pH of the mixture within a range of from 6.0 to 7.5 is uniformly mixed with the starch; that this wet raw soybean flour-mixed starch is dried and heated at a temperature of 120 to 140°C; that the starch is subjected to continuous heating treatment for 2 hours or longer after the temperature of the starch has reached at least 120°C; and then that the moisture is controlled to achieve a water content of 12 to 18%, thereby making it possible to obtain excellent adhesion without causing separation between a coating material and an ingredient of an animal food when the resultant product is used as a coating material or dusting flour for fries.

Patent Document 8 describes a fat-processed starch produced by mixing a phosphoric acid crosslinked starch treated with phosphorus oxychloride, a fat and/or an edible fat analogue and a soybean ground product, and subjecting the resultant mixture to heating treatment, and also describes that the inclusion of phosphorus in an amount of 0.010 to 0.035 mass% can provide a fry having excellent adhesion between a coating and an ingredient and a flaky, crispy and good texture.

Patent Document 9 describes that a fat-processed starch having a reduced fat oxidization odor is obtained by adding one of, or a mixture of two or more of, fats, analogues thereof, fatty acids and derivatives thereof to a starch and causing lipoxygenase to act on the mixture.

Patent document 10 relates to a meat-quality improving agent to inhibit texture deterioration in meats caused with heat and pressure sterilization, which comprises oil-processed starch containing oil and glycerol organic acid fatty acid esters; and a curdlan powder with an average particle size of 0.05 to 50 µm.

### [Reference List]

### [Patent Document]

[Patent Document 1] JP S54-11247 A
[Patent Document 2] JP 2004-113236 A
[Patent Document 3] JP 2010-259399 A
[Patent Document 4] JP 2005-185122 A
[Patent Document 5] JP S62-087062 A
[Patent Document 6] JP H01-320962 A
[Patent Document 7] JP H04-051854 A
[Patent Document 8] JP 2012-029602 A
[Patent Document 9] JP 2000-106832 A
[Patent Document 10] US 2006/292269 A1

### SUMMARY OF THE INVENTION

### [Problem to be Solved]

However, these conventional fat-processed starches involve the problems that mixing of a fat alone causes starch lumping during dispersion in water and difficulty in uniform dispersion, and that the use of an emulsifying agent as an improving agent therefor improves the dispersibility, but reduces the adhesion between an ingredient and a coating when they are used as coating materials. Soybean flour, when used, improves the dispersibility, but is limitedly used because it can problematically act as an allergen. Further, the coating tends to have a protein-derived crunchy hard texture which deteriorates the taste.

Therefore, an object of the present invention is to provide a fat-processed starch having excellent dispersibility in a food raw material such as batter and excellent adhesion to ingredients and providing a good texture.

### [Solution to the Problem]

As a result of earnest studies to solve the above problems, the present inventors have found that, when a fat-processed starch obtained by adding to a starch a fat composition having a specific iodine value and containing a certain amount of a polyphenol and aging the starch mixture is used as a coating material for fries, the fat-processed starch has excellent workability and high adhesion to ingredients and provides fries having a soft and juicy texture, and eventually have completed the present invention.

A first aspect of the present invention provides a fat-processed starch which comprises a fat composition having an iodine value of 125 to 170 and containing 35 ppm to 8,000 ppm of a polyphenol, obtained by adding a fat composition to a starch and aging the obtained starch mixture.

The starch is preferably tapioca starch.

A second aspect of the present invention provides a method for producing a fat-processed starch, which comprises adding a fat composition to a starch and aging the obtained starch mixture, said fat composition having an iodine value of 125 to 170 and containing 35 ppm to 8,000 ppm of a polyphenol.

In the method for producing a fat-processed starch according to the present invention, the content of the fat composition preferably ranges from 0.01% to 5% by mass based on the starch. The starch is preferably tapioca starch.

### [Advantages of the Invention]

The fat-processed starch of the present invention, when used in a raw material such as batter, has good dispersibility and is hard to lump up, and thus has excellent workability. Further, for example when used as a coating material for fries, the fat-processed starch can provide a fry having high adhesion between an ingredient and a coating and a soft and juicy texture.

### MODE FOR CARRYING OUT THE INVENTION

The starch used in the present invention is not particularly limited so long as it can be used for foods. Examples of the starch include corn starch, tapioca starch, rice starch, wheat starch, potato starch, sweet potato starch, mung bean starch, dogtooth violet starch, arrowroot starch, bracken starch, sago starch and Ooubayuri (*Cardiocrinum cardatum var. glehnii*) starch. Among these starches, the starch to be used is preferably tapioca starch and/or corn starch, particularly preferably tapioca starch, from the viewpoint of cost and effects. For all the starches, not only normal starches, but also those improved by thremmatological or gene-engineering techniques, such as nonglutinous species, waxy species and high amylose species, may be used. Further, various processed-starches can also be used as raw material starches in the present invention. There may be used starches obtained by subjecting starches to chemical modification treatment such as oxidation treatment, esterification treatment, etherification treatment and crosslinking treatment; processing treatment such as pregelatinization treatment, granulation treatment, moist-heat treatment, ball milling treatment, pulverization treatment, heating treatment, warm water treatment, bleaching treatment, sterilization treatment, acid treatment, alkali treatment and enzyme treatment; or two or more treatments thereof. Among these processed starches, the starch to be utilized as a coating material for fries is preferably a crosslinked starch, particularly preferably a phosphoric acid crosslinked starch.

The fat composition used in the present invention contains an animal/vegetable fat, or an oil content of seed powder, fruit powder, herb powder and the like including grain flour such as soybean flour as described in Patent Document 7. The fat composition of the present invention must have an iodine value of 125 to 170, and preferably has an iodine value of 130 to 150. When the iodine value is less than 125, the texture of the coating is hard and difficult to crumble. When the iodine value is more than 170, lumping occurs during the preparation of a batter, which requires a long operation time. Further, the texture of the coating is hard and difficult to crumble. The fat used in the present invention is not particularly limited so long as it has an iodine value of 125 to 170. Examples of the fat having an iodine value of 125 to 170 include safflower oil, grape oil, soybean oil, sunflower oil, corn oil, kaya oil and poppy oil. Fats having an iodine value falling outside the range of from 125 to 170, such as linseed oil, perilla oil, Shiso (Japanese basil) oil, cotton-seed oil, sesame oil, rapeseed oil, peanut oil, olive oil, palm oil, coconut oil, beef tallow, lard, chicken fat, mutton tallow, whale oil and fish oil can also be used through treatment such as mixing to adjust the iodine value to 125 to 170.

The iodine value is an index of the total number of unsaturated double bonds existing in a fatty acid, and can be measured, for example, according to "2.3.4.1₋2013 Iodine Value (Wijs-Cyclohexane Method)" in the Standard Methods for the Analysis of Fats, Oils and Related Materials edited by Japan Oil Chemists' Society (Japan Oil Chemists' Society).

The fat composition used in the present invention contains a specific amount of a polyphenol. The "polyphenol" used herein is a generic term of plant components having a plurality of phenolic hydroxyl groups (hydroxy groups) in the same molecule. Polyphenols are pigments or bitter components contained in most plants and are water soluble (some of which are fat soluble) substances having excellent antioxidant ability. The polyphenol is not particularly limited, and includes, for example, grape polyphenol, pine bark polyphenol, apple polyphenol, cacao polyphenol and green tea polyphenol. These polyphenols are multi-component compounds, and specific examples thereof include isoflavones such as genistin, daidzein and puerarin; flavonols such as quercetin, kaempferol, myricetin and rutin; flavanones such as hesperidin, naringenin and naringin; anthocyanins which are glycosides of cyanidin, delphinidin, malvidin, peonidin and petunidin; flavanols such as catechin, epicatechin, epigallocatechin, epicatechin gallate, epigallocatechin gallate and theaflavin; and flavones such as chrysin, apigenin and luteolin. Further, a lignan such as sesamine, sesamolin, sesaminol or sesamol, a stilbenoid such as resveratrol, or a chlorogenic acid, a gallic acid, an ellagic acid, galangin, fisetin or the like is also suitable. Compounds containing a polyphenol of seed powder, fruit powder, herb powder or the like can also be used as the polyphenol in the present invention.

The content of the polyphenol in the fat composition used in the present invention must range from 35 ppm to 8,000 ppm, and preferably ranges from 50 ppm to 800 ppm. A polyphenol content of less than 35 ppm causes a reduction in workability during the preparation of a batter and makes the texture hard and difficult to crumble, and thus is not preferred. A polyphenol content of more than 8,000 ppm causes a reduction in juiciness of fries, and thus is not preferred.

In the present invention, in addition to the fat composition, an emulsifying agent may be added within a range in which the purpose of the present invention would not be inhibited. Examples of the emulsifying agent includes glycerol fatty acid esters, polyglycerol fatty acid esters, organic acid monoglycerides, sorbitan fatty acid esters, propylene glycol fatty acid esters, sucrose fatty acid esters and lecithins. Also, a combination of these substances may be employed. When an emulsifying agent is added, the amount thereof to be added ranges preferably from 10 to 1,000 parts by mass, more preferably from 20 to 500 parts by mass based on 100 parts by mass of the fat composition.

The fat-processed starch in the present invention has surface physical properties altered by attaching the fat composition to at least part of surfaces of starch particles. This is obtained by mixing the fat composition with a starch and aging the starch mixture at a temperature not lower than ordinary temperature. Hence, a starch having properties which are different from those of starches merely mixed with the fat composition is obtained.

The aging treatment can be carried out by treating a mixture of a starch and the fat composition, and, if necessary, other raw materials such as an emulsifying agent at a temperature not lower than ordinary temperature in a state where the mixture is put in a reactor, an extruder, a dryer, a tank, a container, a packaging material, etc. The treatment progresses at a temperature not lower than ordinary temperature, and the time required for aging is short at a high temperature. The "ordinary temperature" used herein means a temperature ranging from 15 to 25°C. Even at ordinary temperature, the fat-processed starch can be obtained, for example, through about one-month storing for aging. On the other hand, in the case where heating is conducted for shortening the time required for aging, the raw material starch is hydrolyzed or thermally decomposed at an excessively high temperature. Hence, the adhesion power may be reduced in some cases, when the fat-processed starch is used as a coating material for fries. Therefore, when heating is conducted for accelerating the aging treatment, conditions under which excessive decomposition does not occur must be set. A proper heating temperature includes, for example, 30 to 150°C. The aging time may be shorter at a higher temperature, but suitably ranges from 1 to 336 hours (2 weeks).

The amount of the fat composition to be added to the starch ranges preferably from 0.01 to 5 parts by mass, more preferably from 0.02 to 4 parts by mass, particularly preferably from 0.03 to 3 parts by mass based on 100 parts by mass of the starch. When the amount is less than 0.01 by weight, the surfaces of the starch particles are not sufficiently coated and the powder properties do not change. On the other hand, when the amount exceeds 5 parts by weight, the powder fluidity of the starch is poor and the workability is not satisfactory.

The fat-processed starch of the present invention may be used while being blended in various foods. The kinds of foods are not particularly limited, and, for example, the fat-processed starch can be used in batter and dusting flour as coating materials for fries, and foods including meat, solid or gel-like foods such as processed meat products, processed marine products, noodles and bread.

The fat-processed starch of the present invention has good dispersibility in dough and batter and excellent workability in the production of various foods. Also, it is dispersed uniformly in dough and batter, and thus can make the texture of the obtained foods good. For example, in the case where the fat-processed starch is used in batter as a coating material for fries, it provides good workability by virtue of high dispersibility when used to prepare a batter. Fries cooked using the batter have high adhesion between an ingredient and a coating and a soft and juicy texture.

The content of the polyphenol in the fat composition herein can be measured specifically by the following method.

To 5.0 g of a fat composition, 0.2 g of polyoxyethylene (20) sorbitan monolaurate is added, and the mixture is stirred with a magnetic stirrer for 5 minutes. Then, 10 mL of a solution obtained by mixing methanol and water in a ratio of 4:1 is added, and the mixed solution is stirred with the magnetic stirrer for 5 minutes. After stirring, sonication is carried out with an ultrasonic apparatus for 15 minutes, and then the solution is stirred with the magnetic stirrer for 5 minutes. After stirring, the solution is centrifuged under conditions of 20 minutes, 3,000 g and room temperature, and the resultant upper layer is recovered. The resultant lower layer is subjected to an operation similar to the above operation again, and the resultant upper layer is recovered again. The upper layer is mixed with the upper layer obtained through the first operation to prepare a polyphenol extract.

To 0.2 mL of the polyphenol extract, 1 mL of Folin & Ciocalteu's phenol reagent (manufactured by SIGMA-ALDRICH) diluted 10 times with pure water is added, and the solution is allowed to stand for 5 minutes. Added is 0.8 mL of a 7.5% sodium carbonate solution, and the solution is allowed to stand for 5 minutes, and vortex-mixed. The mixed solution is reacted in a thermostatic water bath at 50°C for 10 minutes. After the reaction, the reaction product is allowed to cool at room temperature for 5 minutes to measure the absorbency at 750 nm. A calibration curve is created, through an operation similar to the above operation, using 0 to 80 mg/L of a gallic acid solution prepared from a solution in which ethanol and water are mixed in a ratio of 1:1. A value calculated, from the absorbency obtained from the polyphenol extract, using the calibration curve is defined as polyphenol content.

### [Example]

The present invention will be described in detail by way of the following examples, the technical scope of the invention is not limited to the following examples. In addition, the units "%," "part(s)" and the like are on the mass basis unless otherwise specified, and the numerical ranges thereof are indicated as including their endpoints.

### (Example 1)

Epigallocatechin gallate was added to safflower oil to adjust the polyphenol content to 50 ppm, thereby obtaining a fat composition. To 100 parts of tapioca starch, 2 parts of the prepared fat composition was added to uniformly mix them with a mortar, thereby obtaining a mixture. This mixture was heated at 70°C in a thermostatic bath for 5 days, thereby obtaining a fat-processed starch (Sample 1).

### (Example 2)

Except that the polyphenol content of the fat composition was changed to 80 ppm in Example 1, Sample 2 was obtained in the same manner as in Example 1.

### (Example 3)

Except that grape oil was used in place of safflower oil and that the polyphenol content of the fat composition was changed to 80 ppm in Example 1, Sample 3 was obtained in the same manner as in Example 1.

### (Example 4)

Except that a vegetable fat obtained by mixing perilla oil and rapeseed oil to attain an iodine value of 140 was used in place of safflower oil and that the polyphenol content of the fat composition was changed to 80 ppm in Example 1, Sample 4 was obtained in the same manner as in Example 1.

### (Example 5)

Except that grape oil was used in place of safflower oil and that the polyphenol content of the fat composition was changed to 750 ppm in Example 1, Sample 5 was obtained in the same manner as in Example 1.

### (Example 6)

Except that grape oil was used in place of safflower oil, that rutin was used as a polyphenol in place of epigallocatechin gallate, and that the polyphenol content of the fat composition was changed to 750 ppm in Example 1, Sample 6 was obtained in the same manner as in Example 1.

### (Example 7)

Except that grape oil was used in place of safflower oil, that resveratrol was used as a polyphenol in place of epigallocatechin gallate, and that the polyphenol content of the fat composition was changed to 750 ppm in Example 1, Sample 7 was obtained in the same manner as in Example 1.

### (Example 8)

Except that grape oil was used in place of safflower oil, that quercetin was used as a polyphenol in place of epigallocatechin gallate, and that the polyphenol content of the fat composition was changed to 750 ppm in Example 1, Sample 8 was obtained in the same manner as in Example 1.

### (Example 9)

Except that grape oil was used in place of safflower oil, that catechin was used as a polyphenol in place of epigallocatechin gallate, and that the polyphenol content of the fat composition was changed to 750 ppm in Example 1, Sample 9 was obtained in the same manner as in Example 1.

### (Example 10)

Except that grape oil was used in place of safflower oil, that chrysin was used as a polyphenol in place of epigallocatechin gallate, and that the polyphenol content of the fat composition was changed to 750 ppm in Example 1, Sample 10 was obtained in the same manner as in Example 1.

### (Example 11)

Except that grape oil was used in place of safflower oil, that hesperidin was used as a polyphenol in place of epigallocatechin gallate, and that the polyphenol content of the fat composition was changed to 750 ppm in Example 1, Sample 11 was obtained in the same manner as in Example 1.

### (Example 12)

Except that grape oil was used in place of safflower oil, that gallic acid was used as a polyphenol in place of epigallocatechin gallate, and that the polyphenol content of the fat composition was changed to 750 ppm in Example 1, Sample 12 was obtained in the same manner as in Example 1.

### (Example 13)

Except that grape oil was used in place of safflower oil and that the polyphenol content of the fat composition was changed to 7,500 ppm in Example 1, Sample 13 was obtained in the same manner as in Example 1.

### (Comparative Example 1)

To 100 parts of tapioca starch, 2 parts of perilla oil was added to uniformly mix them with a mortar, thereby obtaining a mixture. This mixture was heated at 70°C in a thermostatic bath for 5 days, thereby obtaining Sample 14.

### (Comparative Example 2)

Except that safflower oil was added in place of perilla oil in Comparative Example 1, Sample 15 was obtained in the same manner as in Comparative Example 1.

### (Comparative Example 3)

Except that rapeseed oil was added in place of perilla oil in Comparative Example 1, Sample 16 was obtained in the same manner as in Comparative Example 1.

### (Comparative Example 4)

Except that perilla oil was used in place of safflower oil and that the polyphenol content of the fat composition was changed to 750 ppm in Example 1, Sample 17 was obtained in the same manner as in Example 1.

### (Comparative Example 5)

Except that rapeseed oil was used in place of safflower oil and that the polyphenol content of the fat composition was changed to 750 ppm in Example 1, Sample 18 was obtained in the same manner as in Example 1. With 40 parts (in terms of the weight of dry matter) of Samples 1 to 18, 44 parts of a cake flour part, 1 part of common salt, 1 part of sodium glutamate, 6 parts of powdery soy sauce, 1 part of powdery garlic, and 0.3 parts of xanthan gum were mixed to prepare mix flour. To 100 parts of the prepared mix flour, 110 parts of ice cold water was added to mix them while stirring, thereby preparing a batter.

In addition, the workabilities of Samples 1 to 18 were evaluated in the operation so far, and the criteria for evaluation are as follows. The evaluation was expressed in terms of the average point of five panelists (the same applies to other evaluations).

1: Very lumpy and difficult to suspend; 2: Lumpy; 3: Lumps somewhat observed; 4: No lump observed; 5: No lump observed and easy to suspend

Chicken breast trimmed of skin and fat was cut into 20 g, and the batter was attached to the cut chicken breast in an amount of 30 mass% relative to the mass of the chicken breast. The chicken breast was fried in refined soybean oil at 175°C for 3 minutes 30 seconds to prepare deep-fried chicken breast.

The deep-fried chicken breast was cut in half 30 minutes after frying, and the adhesion between the meat and the coating was visually evaluated. The criteria for evaluation are as follows.

1: Completely separated; 2: Almost separated; 3: Half separated; 4: Almost adhered; 5: Completely adhered

Also, the texture of the deep-fried chicken breast was evaluated 30 minutes after frying. Concerning the criteria for evaluation of the texture, deep-fried chicken breast having a soft, easy-to-crumble and juicy texture was evaluated as good. The criteria for evaluation are as follows.

1: The coating was hard, and the juiciness as deep-fried chicken breast could not be perceived; 2: The coating was hard, and the deep-fried chicken breast had weak juiciness; 3: The coating was somewhat hard, but the deep-fried chicken breast had juiciness; 4: The coating was soft, and the deep-fried chicken breast had juiciness; 5: The coating was very soft, and the deep-fried chicken breast had juiciness.

The evaluation results of the samples are indicated in Table 1.

**[Table 1]**

| Name of Sample | Kind of fat | Iodine value of fat composition | Kind of polyphenol | Polyphenol content (ppm) | Workability | Adhesion | Texture |
|---|---|---|---|---|---|---|---|
| Sample 1 | Safflower oil | 149 | Epigallocatechin gallate | 50 | 4.6 | 4.4 | 4.8 |
| Sample 2 | Safflower oil | 149 | Epigallocatechin gallate | 80 | 4.8 | 4.8 | 4.4 |
| Sample 3 | Grape oil | 133 | Epigallocatechin gallate | 80 | 4.8 | 4.8 | 4.4 |
| Sample 4 | Rapeseed oil, perilla oil | 140 | Epigallocatechin gallate | 80 | 4.6 | 4.6 | 4.8 |
| Sample 5 | Grape oil | 133 | Epigallocatechin gallate | 750 | 4.2 | 4.4 | 4.2 |
| Sample 6 | Grape oil | 133 | Rutin | 750 | 4.2 | 4.6 | 4.8 |
| Sample 7 | Grape oil | 133 | Resveratrol | 750 | 4.4 | 4.6 | 4.8 |
| Sample 8 | Grape oil | 133 | Quercetin | 750 | 4.2 | 4.4 | 3.8 |
| Sample 9 | Grape oil | 133 | Catechin | 750 | 4.2 | 3.8 | 4.0 |
| Sample 10 | Grape oil | 133 | Chrysin | 750 | 4.2 | 3.8 | 4.2 |
| Sample 11 | Grape oil | 133 | Hesperidin | 750 | 4.6 | 4.8 | 4.8 |
| Sample 12 | Grape oil | 133 | Gallic acid | 750 | 4.2 | 4.0 | 3.8 |
| Sample 13 | Grape oil | 133 | Epigallocatechin gallate | 7,500 | 4.6 | 4.2 | 3.6 |
| Sample 14 | Perilla oil | 202 | - | 22 | 1.2 | 3.2 | 2.2 |
| Sample 15 | Safflower oil | 149 | - | 24 | 1.6 | 4.0 | 1.8 |
| Sample 16 | Rapeseed oil | 110 | - | 34 | 4.2 | 2.0 | 2.2 |
| Sample 17 | Perilla oil | 202 | Epigallocatechin gallate | 750 | 2.0 | 3.0 | 2.8 |
| Sample 18 | Rapeseed oil | 110 | Epigallocatechin gallate | 750 | 4.4 | 3.8 | 2.6 |

From the results indicated in Table 1, all of Samples 1 to 13 using the fat compositions of Examples 1 to 13 having an iodine value of 125 to 170 and containing 35 ppm to 8,000 ppm of a polyphenol had good workability during the preparation of a batter, and provided a deep-fried food having good adhesion between the ingredient and the coating and an excellent texture.

On the other hand, Sample 14 using the fat composition of Comparative Example 1 having a high iodine value and not containing the predetermined amount of a polyphenol had high adhesion but poor workability and provided a hard and difficult-to-crumble texture, and thus was not preferred.

Sample 15 using the fat composition of Comparative Example 2 not containing the predetermined amount of a polyphenol had high adhesion but poor workability and provided a hard and difficult-to-crumble texture, and thus was not preferred.

Sample 16 using the fat composition of Comparative Example 3 having a low iodine value and not containing the predetermined amount of a polyphenol had good workability, but was not excellent in terms of the adhesion or texture.

Sample 17 using the fat composition of Comparative Example 4 containing the predetermined amount of a polyphenol but having a high iodine value had poor workability and provided a hard and difficult-to-crumble texture, and thus was not preferred.

Sample 18 using the fat composition of Comparative Example 5 containing the predetermined amount of a polyphenol but having a low iodine value had good workability and adhesion but provided a hard and difficult-to-crumble texture, and thus was not preferred.

## Claims

1. A fat-processed starch which comprises a fat composition having an iodine value of 125 to 170 and containing 35 ppm to 8,000 ppm of a polyphenol, obtained by adding a fat composition to a starch and aging the obtained starch mixture.

2. The fat-processed starch according to claim 1, wherein the starch is tapioca starch.

3. A method for producing a fat-processed starch, which comprises adding a fat composition to a starch and aging the obtained starch mixture, said fat composition having an iodine value of 125 to 170 and containing 35 ppm to 8,000 ppm of a polyphenol.

4. The method for producing a fat-processed starch according to claim 3, wherein the amount of the fat composition to be added ranges from 0.01% to 5% by mass based on the starch.

5. The method for producing a fat-processed starch according to claim 3 or 4, wherein the starch is tapioca starch.

## Patentansprüche

1. Fettverarbeitete Stärke, die eine Fettzusammensetzung umfasst, welche eine Iodzahl von 125 bis 170 aufweist und 35 ppm bis 8000 ppm eines Polyphenols enthält, erhalten durch Hinzufügen einer Fettzusammensetzung zu einer Stärke und Alternlassen des erhaltenen Stärkegemischs.

2. Fettverarbeitete Stärke gemäß Anspruch 1, wobei es sich bei der Stärke um Tapiokastärke handelt.

3. Verfahren zur Herstellung einer fettverarbeiteten Stärke, umfassend das Hinzufügen einer Fettzusammensetzung zu einer Stärke und Alternlassen des erhaltenen Stärkegemischs, wobei die Fettzusammensetzung eine Iodzahl von 125 bis 170 aufweist und 35 ppm bis 8000 ppm eines Polyphenols enthält.

4. Verfahren zur Herstellung einer fettverarbeiteten Stärke gemäß Anspruch 3, wobei die Menge der hinzuzufügenden Fettzusammensetzung im Bereich von 0,01 bis 5 Massen-% liegt, bezogen auf die Stärke.

5. Verfahren zur Herstellung einer fettverarbeiteten Stärke gemäß Anspruch 3 oder 4, wobei es sich bei der Stärke um Tapiokastärke handelt.

## Revendications

1. Un amidon traité au moyen d'une graisse, qui comprend une composition de graisse ayant un indice d'iode de 125 à 170 et contenant de 35 ppm à 8000 ppm d'un polyphénol, obtenu en ajoutant une composition de graisse à un amidon et en opérant un vieillissement du mélange d'amidon obtenu.

2. L'amidon traité au moyen d'une graisse selon la revendication 1, dans lequel l'amidon est de l'amidon de tapioca.

3. Un procédé de production d'un amidon traité au moyen d'une graisse, qui comprend le fait d'ajouter une composition de graisse à un amidon et le fait d'opérer un vieillissement du mélange d'amidon obtenu, ladite composition de graisse ayant un indice d'iode de 125 à 170 et contenant de 35 ppm à 8000 ppm d'un polyphénol.

4. Le procédé de production d'un amidon traité au moyen d'une graisse selon la revendication 3, dans lequel la quantité de la composition de graisse à ajouter va de 0,01 % à 5 % en masse par rapport à l'amidon.

5. Le procédé de production d'un amidon traité au moyen d'une graisse selon la revendication 3 ou la revendication 4, dans lequel l'amidon est de l'amidon de tapioca.
